(19) Europäisches Patentamt
European Patent Office
Office européen des brevets

(11) Veröffentlichungsnummer: **0 019 759**
**B1**

# (12) EUROPÄISCHE PATENTSCHRIFT

(45) Veröffentlichungstag der Patentschrift: **10.02.82**

(51) Int. Cl.³: **C 07 C 155/02,** A 01 N 47/20

(21) Anmeldenummer: **80102482.9**

(22) Anmeldetag: **07.05.80**

(54) **N-Arylthiolcarbamate, Herbizide, die diese Verbindungen enthalten, und Verfahren zur Bekämpfung unerwünschten Pflanzenwuchses mit diesen Verbindungen.**

(30) Priorität: **25.05.79 DE 2921130**

(43) Veröffentlichungstag der Anmeldung: **10.12.80 Patentblatt 80/25**

(45) Bekanntmachung des Hinweises auf die Patenterteilung: **10.02.82 Patentblatt 82/6**

(84) Benannte Vertragsstaaten: **AT BE CH DE FR GB IT LI NL SE**

(56) Entgegenhaltungen:
**DE-A-1 900 341**
**FR-A-1 484 461**
**US-A-3 066 021**

(73) Patentinhaber: **BASF Aktiengesellschaft, Carl-Bosch-Strasse 38, D-6700 Ludwigshafen (DE)**

(72) Erfinder: **Schirmer, Ulrich, Dr., Berghalde 79, D-6900 Heidelberg 1 (DE)**
Erfinder: **Koenig, Karl-Heinz, Dr., Pierstrasse 8 a, D-6710 Frankenthal (DE)**
Erfinder: **Wuerzer, Bruno, Dr., Ruedigerstrasse 13, D-6701 Otterstadt (DE)**
Erfinder: **Retzlaff, Guenter, Schillerstrasse 34, D-6725 Roemerberg 3 (DE)**

**EP 0 019 759 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# N-Arylthiolcarbamate, Herbizide, die diese Verbindungen enthalten, und Verfahren zur Bekämpfung unerwünschten Pflanzenwuchses mit diesen Verbindungen

Die vorliegende Erfindung betrifft neue N-Arylthiolcarbamate, Herbizide, die diese Verbindungen als Wirkstoffe enthalten, und ein Verfahren zur Bekämpfung unerwünschten Pflanzenwuchses mit diesen Verbindungen.

Es ist bekannt, dass S-Methyl-N-(3-chlorphenyl)-thiolcarbamat herbizide Eigenschaften hat (US-PS 2 863 899). Diese Verbindung hat gegenüber höheren Pflanzen nur eine geringe herbizide Aktivität.

Es ist ferner bekannt, dass N-Dichlorphenyl- und N-Halomethyl-chlorphenyl-thiolcarbaminsäure-S-methylester herbizid wirksam sind (US 3 066 021, FR 1 484 461).

Es wurde nun gefunden, dass neue N-Arylthiolcarbamate der allgemeinen Formel

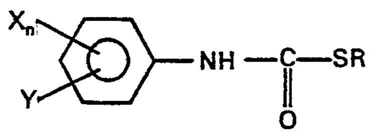

in der

R Methyl oder Äthyl

X Halogen (Chlor, Brom, Fluor, Jod) und

Y Alkyl (z.B. Methyl, Äthyl, i-Propyl, t-Butyl, n-Hexyl), Halogenalkyl mit mindestens 2 Kohlenstoffatomen (z.B. 1-Chlor-iso-propyl, 2-Chloräthyl, Chlor-tert.-butyl), Alkoxyalkyl (z.B. Methoxymethyl, Isopropoxymethyl, 2-Methoxyäthyl) oder Cycloalkyl (z.B. Cyclopropyl, Cyclopentyl, Cyclohexyl), Alkoxy (z.B. Methoxy, Äthoxy, n-Propyloxy, i-Propyloxy), Halogenmethoxy (z.B. Difluormethoxy, Trifluormethoxy) und n die Zahlen 1 oder 2 bedeuten, wobei für den Fall, dass n 2 bedeutet, die Bedeutungen von X unabhängig voneinander gewählt werden können, gegen eine Reihe von breitblättrigen und grasartigen unerwünschten Pflanzen eine unerwartet gute herbizide Wirkung aufweisen und dabei gleichzeitig noch für Kulturpflanzen verträglich sind.

Für die Herstellung der neuen Verbindungen eignen sich beispielsweise die beiden folgenden Verfahren:

A

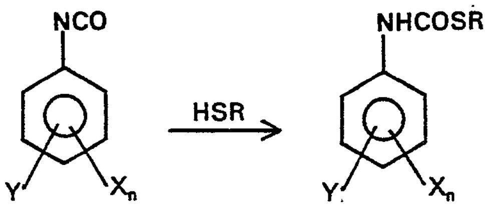


Die Umsetzung von Arylisocyanaten mit Mercaptanen erfolgt in Gegenwart oder in Abwesenheit eines für Isocyanatreaktionen gebräuchlichen Katalysators, z.B. tertiäre Amine (Triäthylamin, 1,4-Diazabicyclo-(2,2,2)-octan, stickstoffhaltige Heterocyclen (Pyridin, 1,2-Dimethylimidazol) oder organische Zinnverbindungen (Dibutylzinndiacetat, Dimetzhylzinndichlorid) gegebenenfalls in einem unter den Reaktionsbedingungen inerten Lösungsmittel, beispielsweise Kohlenwasserstoff (z.B. Ligroin, Benzin, Toluol, Pentan, Cyclohexan), Halogenkohlenwasserstoff (z.B. Methylenchlorid, Chloroform, Dichloräthan, Chlorbenzol, o-, m- oder p-Dichlorbenzol), Nitrokohlenwasserstoff (z.B. Nitrobenzol, Nitromethan), Nitrile (z.B. Acetonitril, Butyronitril, Benzonitril), Äther (z.B. Diäthyläther, Tetrahydrofuran, Dioxan), Ester (z.B. Essigsäureäthylester, Propionsäuremethylester), Ketone (z.B. Aceton, Methyläthylketon) oder Amide (z.B. Dimethylformamid, Formamid) bei Temperaturen im Bereich von −30 °C bis +150 °C, vorzugsweise im Bereich von 0 bis 40 °C in äquivalenten Mengen oder mit einem Überschuss eines Reaktionspartners (S. Petersen in Methoden der Organ. Chemie, Band VIII, Seite 131, Georg Thieme-Verlag, Stuttgart, 4. Auflage, 1952).

B

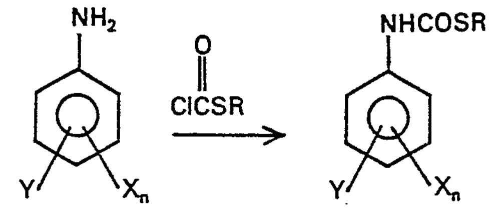

Aromatische Amine werden mit Chlorameisensäureethioestern in einem Lösungsmittel, z.B. Wasser, Alkohole (z.B. Methanol, Äthanol, Isopropanol) oder wie unter A angegeben, unter Zuhilfenahme eines üblichen Säurebinders, z.B. Alkalihydroxide, -carbonate, -hydrogencarbonate, Erdalkalioxide, -hydroxide, -carbonate, -hydrogencarbonate, tertiäre organische Basen (z.B. Triäthylamin, Pyridin, N,N-Dimethylanilin, N,N-Dimethylcyclohexylamin, Chinolin, Tributylamin) bei Temperaturen von −120 °C bis +150 °C, vorzugsweise im Bereich von 20 bis 60 °C umgesetzt. Das Verfahren B wird bevorzugt (DE-OS 1 643 763).

Die folgenden Beispiele sollen die Herstellung der neuen N-Arylthiolcarbamate erläutern:

## Beispiel 1

Zu 12,5 g Gewichtsteilen 3-Methyl-4-fluorphenylisocyanat, gelöst in 200 Gewichtsteilen Toluol, tropft man bei 0 °C eine Lösung von 4,1 Gewichtsteilen Methylmercaptan und einem Tropfen Triäthylamin in 40 Gewichtsteilen Acetonitril. Man lässt langsam auf Raumtemperatur (20 °C) erwärmen, verdampft die Lösungsmittel am Rotationsverdampfer und kristallisiert aus Cyclohexan um. Man erhält weisse Kristalle vom Fp. 98–99 °C. (Nr. 1)

Die Verbindung hat folgende Strukturformel:

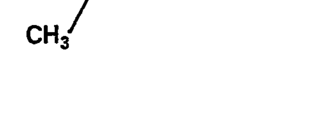

Beispiel 2

Zu 135 Gewichtsteilen 3-Chlor-4-isopropylanilin in 1000 Gewichtsteilen Tetrahydrofuran (THF) werden 100 Gewichtsteile Natriumhydrogencarbonat zugesetzt. Unter Rühren tropft man bei Raumtemperatur (20 °C) 89 Gewichtsteile Chlorameisensäurethiomethylester zu, lässt 15 Stunden bei Raumtemperatur nachrühren, filtriert, destilliert das Lösungsmittel am Rotationsverdampfer ab und versetzt das erhaltene Öl mit Petroläther. Die sich abscheidenden Kristalle werden abgesaugt und getrocknet: Fp. 116–118°C. (Nr. 2)

Die Verbindung hat folgende Strukturformel:

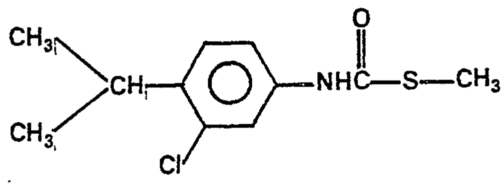

Nach entsprechenden Verfahren können folgende N-Arylthiolcarbamate hergestellt werden:

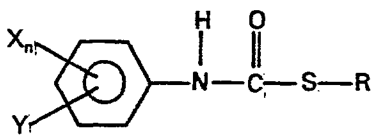

| Nr. | X | Y | R | Fp °C |
|---|---|---|---|---|
| 3 | 3-Cl | 4-$CH(CH_3)_2$ | $C_2H_5$ | hochviskoses Öl |
| 4 | 3-Cl | 4-$CH_3$ | $CH_3$ | 112–113 |
| 5 | 4-Cl | 3-$CH_3$ | $CH_3$ | 105–107 |
| 6 | 3-Br | 4-$CH(CH_3)_2$ | $CH_3$ | |
| 7 | 3-F | 4-$CH(CH_3)_2$ | $CH_3$ | |
| 8 | 3-J | 4-$CH(CH_3)_2$ | $CH_3$ | |
| 9 | 3-Cl | 4-cyclo $C_5H_9$ | $CH_3$ | |
| 10 | 3-Cl | 4-$CH_2CH_2Cl$ | $CH_3$ | |
| 11 | 3-Cl | 4-$C_2H_5$ | $CH_3$ | 93–95 |
| 12 | 4-F | 3-$CH_3$ | $C_2H_5$ | |
| 13 | 3-Cl | 5-$CH_3$ | $CH_3$ | 127–129 |
| 14 | 3-Br | 4-$CH(CH_3)_2$ | $C_2H_5$ | |
| 15 | 3-J | 4-$C_2H_5$ | $CH_3$ | |
| 16 | 3-J | 4-$C(CH_3)_3$ | $C_2H_5$ | |
| 17 | 3-Cl | 4-cyclo $C_6H_{11}$ | $CH_3$ | |
| 18 | 3-Cl | 4-$CH(CH_3)(CH_2Cl)$ | $CH_3$ | 77–79 |
| 19 | 3-Cl | 4-$CH_2CH_2Cl$ | $C_2H_5$ | |
| 20 | 4-J | 2-$CH_3$ | $CH_3$ | |
| 21 | 3-Cl | 4-$CH(CH_3)(CH_2OCH_3)$ | | |
| 22 | 3-Br | 4-$CH_3$ | $CH_3$ | |
| 23 | 3-Cl | 4-cyclo $C_3H_5$ | $CH_3$ | |
| 24 | 3-F | 4-$CH_3$ | $CH_3$ | 122–124 |
| 25 | 3-Cl | 4-$C(CH_3)_3$ | $CH_3$ | 125–127 |
| 26 | 2-F | 4-$CH_3$ | $CH_3$ | |
| 27 | 3-Br | 4-$CH_2OCH_3$ | $CH_3$ | |
| 28 | 4-Cl | 3-$CH_3OC(CH_3)_3$ | $CH_3$ | |
| 29 | 3-Cl | 4-i-$C_5H_{11}$ | $CH_3$ | 74–76 |
| 30 | 4-Cl | 3-$CH(CH_3)_2$ | $CH_3$ | |
| 31 | 4-Br | 3-$CH_2OC(CH_3)_3$ | $CH_3$ | |
| 32 | 3-Cl | 4-$CH_2OCH(CH_3)_2$ | $CH_3$ | |
| 33 | 3-Br | 4-$CH_2OCH(CH_3)_2$ | $CH_3$ | |
| 34 | 3-Br | 4-n-$C_3H_7$ | $CH_3$ | |
| 35 | 4-Cl | 3-$C(CH_3)_3$ | $CH_3$ | |
| 36 | 4-Br | 3-$CH(CH_3)_2$ | $CH_3$ | |
| 37 | 4-Cl | 3-$CH_3OCH_3$ | $CH_3$ | |
| 38 | 3-Cl | 4-$CH(CH_3)(C_2H_5)$ | $CH_3$ | 83–85 |
| 39 | 4-Cl | 3-$C_2H_5$ | $CH_3$ | |
| 40 | 3-Br | 4-$C_2H_5$ | $CH_3$ | |
| 41 | 3-Br | 4-$C(CH_3)_2(C_2H_5)$ | $CH_3$ | |
| 42 | 4-Br | 3-$CH_3$ | $CH_3$ | 97–99 |
| 43 | 3-Cl | 4-$CH_2CH_2OCH_3$ | $CH_3$ | |
| 44 | 3-Cl | 4-n-$C_3H_7$ | $CH_3$ | |
| 45 | 3-Br | 4-$CH_2CH_2OCH_3$ | $CH_3$ | |
| 46 | 3-Br | 4-$C(CH_3)_3$ | $CH_3$ | |

| Nr. | X | Y | R | Fp °C |
|---|---|---|---|---|
| 47 | 2-F | 5-$CH_3$ | $CH_3$ | |
| 48 | 3-Cl | 4-$CH(CH_3)(C_2H_5)$ | $C_2H_5$ | 70–72 |
| 49 | 3-Cl | 4-n-$C_4H_9$ | $CH_3$ | |
| 50 | 3-Br | 4-cyclo $C_5H_{11}$ | $CH_3$ | |
| 51 | 3-Cl | 4-$C(CH_3)_2(C_2H_5)$ | $CH_3$ | |
| 52 | 2-F | 5-$C(CH_3)_3$ | $CH_3$ | 38–40 |
| 53 | 3-Cl | 4-n-$C_5H_9$ | $CH_3$ | |
| 54 | 3-Cl | 4-$OCF_2H$ | $CH_3$ | 98–100 |
| 55 | 3-Cl | 4-$OCF_3$ | $CH_3$ | |
| 56 | 4-Cl | 3-$OCF_2H$ | $CH_3$ | |
| 57 | 3-Cl | 4-$OCH_3$ | $CH_3$ | 130–132 |
| 58 | 3-Br | 4-$OCH_3$ | $CH_3$ | |
| 59 | 3-Cl | 4-$OC_2H_5$ | $CH_3$ | |
| 60 | 3-Cl, 4-Cl | 5-$CH_3$ | $CH_3$ | 144–146 |
| 61 | 3-Cl | 4-$OCF_3$ | $C_2H_5$ | |
| 62 | 3-Cl | 4-O-i-$C_3H_7$ | $CH_3$ | 108–109 |
| 63 | 3-Cl | 4-O-n-$C_3H_7$ | $CH_3$ | 104–106 |
| 64 | 3-Cl | 4-O-i-$C_3H_7$ | $C_2H_5$ | |
| 65 | 3-Cl | 4-O-n-$C_3H_7$ | $C_2H_5$ | |
| 66 | 3-Cl, 5-Cl | 4-$OCH_3$ | $CH_3$ | 162–164 |
| 67 | 3-Cl | 4-$OCHF_2$ | $C_2H_5$ | |
| 68 | 3-Br | 4-$OC_2H_5$ | $CH_3$ | |
| 69 | 3-Br | 4-O-n-$C_3H_7$ | $CH_3$ | |
| 70 | 3-Br, 5-Cl | 4-$OCH_3$ | $CH_3$ | 161–163 |
| 71 | 3-Br | 4-O-i-$C_3H_7$ | $CH_3$ | |

Der Einfluss verschiedener Vertreter der erfindungsgemässen Verbindungen auf das Wachstum von unerwünschten und erwünschten Pflanzen wird in nachfolgenden Gewächshausversuchen demonstriert:

Als Kulturgefässe dienten Plastikblumentöpfe mit 300 cm³ Inhalt und lehmiger Sand mit 1,5% Humus als Substrat. Die Samen der Testpflanzen entsprechend Tabelle 1 wurden nach Arten getrennt flach eingesät und für die Nachauflaufbehandlung bis zu einer Höhe von 3 bis 10 cm herangezogen. Gewisse Testpflanzenarten wurden zunächst auch als Keimpflanzen in gesonderten Keimbehältern herangezogen und danach in die oben beschriebenen Kulturgefässe umgepflanzt. Die Behandlung mit den chemischen Mitteln erfolgte dann einige Tage später nach dem Anwachsen. Die Wirkstoffe suspendierte und emulgierte man in Wasser als Verteilungsmittel und spritzte sie mittels fein verteilender Düsen auf die Pflanzen. Die Aufstellung der Versuche erfolgte im Gewächshaus, wobei für wärmeliebende Arten heissere Bereiche (25 bis 40 °C) und für solche gemässigter Klimate 15 bis 30 °C bevorzugt wurden. Die Versuchsperiode erstreckte sich über 3 bis 6 Wochen. Während dieser Zeit wurden die Pflanzen gepflegt und ihre Reaktion auf die einzelnen Behandlungen wurde ausgewertet. Die folgenden Tabellen enthalten die Prüfsubstanzen, die jeweiligen Dosierungen in kg/ha Aktivsubstanz und die Testpflanzenarten. Bewertet wird nach einer Skala von 0 bis 100. Dabei bedeutet 0 keine Schädigung oder normalen Ablauf und 100 kein Aufgang der Pflanzen bzw. völlige Zerstörung zumindest der oberirdischen Sprossteile.

Die beigefügten Tabellen präsentieren die selektive herbizide Wirkung der erfindungsgemässen Verbindungen. Die Applikation geschieht vorwiegend im Nachauflaufverfahren. Aber auch eine Vorauflaufwirkung (d.h. bei Anwendung vor dem Keimen der Pflanzen) ist vorhanden. Eine besondere Ausbringungstechnik besteht darin, dass die Wirkstoffe mit Hilfe der Spritzgeräte so gespritzt werden, dass die Blätter empfindlicher Kulturpflanzen nach Möglichkeit nicht getroffen werden, während die Wirkstoffe auf die darunterliegende Bodenfläche oder dort wachsende unerwünschte Pflanzen gelangen (post-directed, laybay). Die Aufwandmengen betragen je nach Jahreszeit und Wachstumsstadium 0,1 bis 15 kg/ha und mehr, wobei sich die höheren Dosen besonders zur totalen Bekämpfung von Vegetationen eignen.

Die herbiziden Mittel enthalten 0,5 bis 95 Gew.%, vorzugsweise 1 bis 90% Wirkstoff.

In Anbetracht der Vielseitigkeit der Applikationsmethoden können die erfindungsgemässen Mittel oder diese enthaltende Mischungen noch in einer weiteren grossen Zahl von Kulturen zur Beseitigung unerwünschten Pflanzenwuchses eingesetzt werden.

Im einzelnen seien folgende Nutzpflanzen genannt:

| Botanischer Name | Deutscher Name | Englischer Name |
|---|---|---|
| Allium cepa | Küchenzwiebel | onions |
| Ananas comosus | Ananas | pineapple |
| Arachis hypogaea | Erdnuss | peanuts (groundnuts) |
| Asparagus officinalis | Spargel | asparagus |
| Aventa sativa | Hafer | oats |
| Beta vulgaris spp. altissima | Zuckerrübe | sugarbeets |
| Beta vulgaris spp. rapa | Futterrübe | fodder beets |
| Beta vulgaris spp. esculenta | Rote Rübe | table beets, red beets |
| Brassica napus var. napus | Raps | rapeseed |
| Brassica napus var. napobrassica | Kohlrübe | |
| Brassica napus var. rapa | Weisse Rübe | turnips |
| Brassica napus var. silvestris | Rübsen | |
| Camellia sinensis | Teestrauch | tea plants |
| Carthamus tinctorius | Saflor-Färbedistel | safflower |
| Carya illinoinensis | Pekannussbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawns |
| Daucus carota | Möhre | carrots |
| Elaesis guineensis | Ölpalme | oil palms |
| Fragaria vesca | Erdbeere | strawberries |
| Glycine max | Sojabohne | soybeans |
| Gossypium hirsutum (Gossypium arboreum, Gossypium herbaceum, Gossypium vitifolium) | Baumwolle | cotton |
| Helianthus annuus | Sonnenblume | sunflowers |
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea battas | Süsskartoffeln | sweet potato |
| Juglans regia | Walnussbaum | walnut trees |
| Lactuca sativa | Kopfsalat | lettuce |
| Lens culinaris | Linse | lentils |
| Linum usitatissimum | Faserlein | flax |
| Lycopersiocon lycopersicum | Tomate | tomato |
| Malus spp. | Apfel | apple trees |
| Manihot esculenta | Maniok | cassava |
| Medicago sativa | Luzerne | alfalfa (lucerne) |
| Mentha piperita | Pfefferminze | peppermint |
| Musa spp. | Obst- u. Mehlbanane | banana plants |
| Nicotiana tabacum (N. rustica) | Tabak | tabacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Urdbohne | mungbeans |
| Phaseolus vulgaris | Buschbohnen | snapbeans, green beens, dry beans |
| Pennisetum glaucum | Perl- oder Rohrkolbenhirse | |
| Petroselinim crispum spp. tuberosum | Wurzelpetersilie | parsley |
| Picea abies | Rotfichte | Norway spruce |
| Abies alba | Weisstanne | fire |
| Pinus spp. | Kiefer | pine trees |
| Pisum sativum | Gartenerbse | English peas |
| Prunus avium | Süsskirsche | cherry trees |
| Prunus domestica | Pflaume | plum trees |

| Botanischer Name | Deutscher Name | Englischer Name |
|---|---|---|
| Prunus dulcis | Mandelbaum | almond trees |
| Prunus persica | Pfirsich | peach trees |
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sesamum indicum | Sesam | Sesame |
| Solanum tuberosum | Kartoffel | Irish potato |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium corymbosum | Kulturheidelbeere | blueberry |
| Vaccinium vitis-idaea | Preisselbeere | cranberry |
| Vicia faba | Pferdebohnen | tick beans |
| Vigna sinensis (V. unguiculata) | Kuhbohne | cow peas |
| Vitis vinifera | Weinbeere | grapes |
| Zea mays | Mais | Indian corn, sweet corn, maize |

Die neuen Arylthiolcarbamate können unter sich und mit zahlreichen Vertretern anderer herbizider oder wachstumsregulierender Wirkstoffgruppen gemischt und gemeinsam ausgebracht werden. Beispielsweise kommen als Mischungskomponenten Diazine, N-Phenyl-carbamate, Thiolcarbamate, Diurethane, Halogencarbonsäuren, Phenoxyfettsäuren, Triazine, Amide, Harnstoffe, Diphenyläther, Triazone, Uracile, Benzofuranderivate und andere in Betracht. Solche Kombinationen dienen zur Verbreiterung des Wirkungsspektrums und erzielen zuweilen synergistische Effekte. Eine Reihe von Wirkstoffen, welche zusammen mit den neuen Verbindungen für verschiedenste Anwendungsbereiche sinnvolle Mischungen ergeben, werden beispielhaft aufgeführt:

5-Amino-4-chlor-2-phenyl-3(2H)-pyridazinon
5-Amino-4-brom-2-phenyl-3(2H)-pyridazinon
5-Amino-4-chlor-2-cyclohexyl-3(2H)-pyridazinon
5-Amino-4-brom-2-cyclohexyl-3(2H)-pyridazinon
5-Methylamino-4-chlor-2-m-trifluormethylphenyl-3(2H)-pyridazinon
5-Methylamino-4-chlor-2-m,α,α,β,β-tetrafluoräthoxyphenyl-3(2H)-pyridazinon
5-Dimethylamino-4-chlor-2-phenyl-3(2H)-pyridazinon
4,5-Dimethoxy-2-phenyl-3(2H)-pyridazinon
4,5-Dimethoxy-2-cyclohexyl-3(2H)-pyridazinon
4,5-Dimethoxy-2-m-trifluormethylphenyl-3(2H)-pyridazinon
5-Methoxy-4-chlor-m-trifluormethylphenyl-3(2h)-pyridazinon
5-Amino-4-brom-2-m-methylphenyl-3(2H)-pyridazinon
3-(1-Methyläthyl)-1H-2,1,3-benzothiadiazin-4(3H)-on-2,2-dioxid und Salze
3-(1-Methyläthyl)-8-chlor-1H-2,1,3-benzothiadiazin-4(3H)-on-2,2-dioxid und Salze
3-(1-Methyläthyl)-8-fluor-1H-2,1,3-benzothiadiazin-4(3H)-on-2,2-dioxid und Salze
3-(1-Methyläthyl)-8-methyl-1H-2,1,3-benzothiadiazin-4(3H)-on-2,2-dioxid und Salze
1-Methoxymethyl-3-(1-methyläthyl)-2,1,3-benzothiadiazin-4-(3H)-on-2,2-dioxid
1-Methoxymethyl-8-chlor-3-(1-methyläthyl)-2,1,3-benzothiadiazin-4-(3H)-on-2,2-dioxid
1-Methoxymethyl-8-fluor-3-(1-methyläthyl)-2,1,3-benzothiadiazin-4-(3H)-on-2,2-dioxid
1-Cyan-8-chlor-3-(1-methyläthyl)-2,1,3-benzothiadiazin-4(3H)-on-2,2-dioxid
1-Cyan-8-fluor-3-(1-methyläthyl)-2,1,3-benzothiadiazin-4(3H)-on-2,2-dioxid
1-Cyan-8-methyl-3-(1-methyläthyl)-2,1,3-benzothiadiazin-4(3H)-on-2,2-dioxid
1-Cyan-3-(1-methyläthyl)-2,1,3-benzothiadiazin-4(3H)-on-2,2-dioxid
1-Azidomethyl-3-(1-methyläthyl)-2,1,3-benzothiadiazin-4(3H)-on-2,2-dioxid
3-(1-Methyläthyl)-1H-(pyridino-[3,2-e]-2,1,3-thiadiazin-(4)-on-2,2-dioxid
N-(1-Äthylpropyl)-2,6-dinitro-3,4-dimethyl-anilin
N-(1-Methyläthyl)-N-äthyl-2,6-dinitro-4-trifluormethyl-anilin
N-n-Propyl-N-β-chloräthyl-2,6-dinitro-4-trifluormethyl-anilin
N-n-Propyl-N-cyclopropylmethyl-2,6-dinitro-4-trifluormethyl-anilin
N-Bis-(n-propyl)-2,6-dinitro-3-amino-4-trifluormethyl-anilin
N-Bis-(n-propyl)-2,6-dinitro-4-methyl-anilin
N-Bis-(n-propyl)-2,6-dinitro-4-methylsulfonyl-anilin
N-Bis-(n-propyl)-2,6-dinitro-4-aminosulfonyl-anilin
Bis-(β-chloräthyl)-2,6-dinitro-4-methyl-anilin
N-Äthyl-N-(2-methylallyl)-2,6-dinitro-4-trifluormethyl-anilin
N-Methylcarbaminsäure-3,4-dichlorbenzylester
N-Methylcarbaminsäure-2,6-di-(tert.butyl)-4-methylphenylester
N-Phenylcarbaminsäure-isopropylester
N-3-Fluorphenylcarbaminsäure-3-methoxypropyl-2-ester
N-3-Chlorphenylcarbaminsäure-isopropylester
N-3-Chlorphenylcarbaminsäure-butin-1-yl-3-ester
N-3-Chlorphenylcarbaminsäure-4-chlor-butin-2-yl-1-ester
N-3,.4-Dichlorphenylcarbaminsäure-methylester
N-(4-Amino-benzolsulfonyl)-carbaminsäure-methylester
O-(N-Phenylcarbamoyl)-propanonoxim
N-Äthyl-2-(phenylcarbamoyl)-oxypropionsäure-amid
3'-N-Isopropyl-carbamoyloxy-propionanilid
Äthyl-N-(3-(N'-phenylcarbamoyloxy)-phenyl)-carbamat
Methyl-N-(3-(N'-methyl-N'-phenylcarbamoyl-oxy)-phenyl)-carbamat
Isopropyl-N-(3-(N'-äthyl-N'-phenylcarbamoyl-oxy)-phenyl)-carbamat
Methyl-N-(3-(N'-3-methylphenylcarbamoyl-oxy)-phenyl)-carbamat
Methyl-N-(3-(N'-4-fluorphenylcarbamoyl-oxy)-phenyl)-carbamat
Methyl-N-(3-(N'-3-chlor-4-fluorphenyl-carbamoyloxy)-phenyl)-carbamat
Äthyl-N-(3-(N'-3-chlor-4-fluorphenylcarbamoyl-oxy)-phenyl)-carbamat
Äthyl-N-(3-(N'-3,4-difluorphenylcarbamoyl-oxy)-phenyl)-carbamat
Methyl-N-(3-(N'-difluorphenylcarbamoyl-oxy)-phenyl)-carbamat
N-3-(4-Fluorphenoxycarbonylamino)-phenylcarbaminsäure-methylester
N-3-(2-Methylphenoxycarbonylamino)-phenylcarbaminsäure-äthylester
N-3-(4-Fluorphenoxycarbonylamino)-phenyl-thiolcarbaminsäure-methylester
N-3-(2,4,5-Trimethylphenoxycarbonylamino)-phenylthiolcarbaminsäure-methylester
N-3-(Phenoxycarbonylamino)-phenyl-thiolcarbaminsäure-methylester
N,N-Diäthyl-thiolcarbaminsäure-p-chlor-benzylester
N,N-Di-n-propyl-thiolcarbaminsäure-äthylester
N,N-Di-n-propyl-thiolcarbaminsäure-n-propyl-ester
N,N-Di-isopropyl-thiolcarbaminsäure-2,3-dichlorallylester
N,N-Di-isopropyl-thiolcarbaminsäure-2,3,3-trichlorallylester
N,N-Di-isopropyl-thiolcarbaminsäure-3-methyl-5-isoxazolyl-methylester
N,N-Di-sec. butyl-thiolcarbaminsäure-äthylester
N,N-Di-sec. butyl-thiolcarbaminsäurebenzylester
N-Äthyl-N-cyclohexyl-thiolcarbaminsäure-äthylester
N-Äthyl-N-bicyclo-[2,2,1]-heptyl-thiolcarbamin-säureäthylester
S-(2,3-Dichlorallyl)-(2,2,4-trimethyl-azetidin)-1-carbothiolat
S-(2,3,3-Trichlorallyl)-(2,2,4-trimethyl-azetidin)-1-carbothiolat
S-Äthyl-hexahydro-1-H-azepin-1-carbothiolat
S-Benzyl-3-methylhexahydro-1-H-azepin-1-carbothiolat
S-Benzyl-2,3-dimethylhexahydro-1-H-azepin-1-carbothiolat
S-Äthyl-3-methylhexahydro-1-H-azepin-1-carbothiolat
N-Äthyl-N-n-butyl-thiolcarbaminsäure-n-propylester
N,N-Dimethyl-dithiocarbaminsäure-2-chlor-allylester
N-Methyl-dithiocarbaminsäure-natrium
Trichloressigsäure-Na-salz
α,α-Dichlorpropionsäure-Na-salz
α,α-Dichlorbuttersäure-Na-salz
α,α,β,β-Tetrafluorpropionsäure-Na-salz
α-Methyl-α,β-dichlorpropionsäure-Na-salz
α-Chlor-β-(4-chlorphenyl)-propionsäure-methylester
α,β-Dichlor-β-phenylpropionsäure-methylester
Benzamido-oxy-essigsäure
2,3,5-Trijodbenzoesäure (Salze, Ester, Amide)
2,3,6-Trichlorbenzoesäure (Salze, Ester, Amide)
2,3,5,6-Tetrachlorbenzoesäure (Salze, Ester, Amide)
2-Methoxy-3,6-dichlorbenzoesäure (Salze, Ester, Amide)
2-Methoxy-3,5,6-trichlorbenzoesäure (Salze, Ester, Amide)
3-Amino-2,5,6-trichlorbenzoesäure (Salze, Ester, Amide)
O,S-Dimethyl-tetrachlor-thioterephthalat
Dimethyl-2,3,5,6-tetrachlor-terephthalat
Dinatrium-3,6-endoxohexahydro-phthalat
4-Amino-3,5,6-trichlor-picolinsäure (Salze)
2-Cyan-3-(N-methyl-N-phenyl)-amino-acryl-säureäthylester
2-[4-(4'-Chlorphenoxy)-phenoxy]-propion-säureisobutylester
2-[4-(2',4'-Dichlorphenoxy)-phenoxy]-propion-säuremethylester
2-[4-(4'-Trifluormethylphenoxy)-phenoxy]-propionsäuremethylester
2-[4-(2'-Chlor-4'-trifluorphenoxy)-phenoxy]-propionsäure-Na-salz
2-[4-(3',5'-Dichlorpyridyl-2-oxy)-phenoxy]-propionsäure-Na-salz
2-(N-Benzoyl-3,4-dichlorphenylamino)-propionsäureäthyl-ester
2-(N-Benzoyl-3-chlor-4-fluorphenylamino)-propionsäure-methylester
2-(N-Benzoyl-3-chlor-4-fluorphenylamino)-propionsäureisopropylester
2-Chlor-4-äthylamino-6-isopropylamino-1,3,5-triazin
2-Chlor-4-äthylamino-6-(amino-2'-propionitril)-1,3,5-triazin
2-Chlor-4-äthylamino-6-2-methoxypropyl-2-amino-1,3,5-triazin
2-Chlor-4-äthylamino-6-butin-1-yl-2-amino-1,3,5-triazin

2-Chlor-4,6-bisäthylamino-1,3,5-triazin
2-Chlor-4,6-bisisopropylamino-1,3,5-triazin
2-Chlor-4-isopropylamino-6-cyclopropylamino-1,3,5-triazin
2-Azido-4-methylamino-6-isopropylamino-1,3,5-triazin
2-Methylthio-4-äthylamino-6-isopropylamino-1,3,5-triazin
2-Methylthio-4-äthylamino-6-tert. butylamino-1,3,4-triazin
2-Methylthio-4,6-bisäthylamino-1,3,5-triazin
2-Methylthio-4,6-bisisopropylamino-1,3,5-triazin
2-Methoxy-4-äthylamino-6-isopropylamino-1,3,5-triazin
2-Methoxy-4,6-bisäthylamino-1,3,5-triazin
2-Methoxy-4,6-bisisopropylamino-1,3,5-triazin
4-Amino-6-tert. butyl-3-methylthio-4,5-dihydro-1,2,4-triazin-5-on
4-Amino-6-phenyl-3-methyl-4,5-dihydro-1,2,4-triazin-5-on
4-Isobutylidenamino-6-tert.butyl-3-methylthio-4,5-dihydro-1,2,4-triazin-5-on
1-Methyl-3-cyclohexyl-6-dimethylamino-1,3,5-triazin-2,4-dion
3-tert. Butyl-5-chlor-6-methyluracil
3-tert.Butyl-5-brom-6-methyluracil
3-Isopropyl-5-brom-6-methyluracil
3-sec.Butyl-5-brom-6-methyluracil
3-(2-Tetrahydropyranyl)-5-chlor-6-methyluracil
3-(2-Tetrahydropyranyl)-5,6-trimethylenuracil
3-Cyclohexyl-5,6-trimethylenuracil
2-Methyl-4-(3′-trifluormethylphenyl)-tetrahydro-1,2,4-oxa-diazin-3,5-dion
2-Methyl-4-(4′-fluorphenyl)-tetrahydro-1,2,4-oxadiazin-3,5-dion
3-Amino-1,2,4-triazol
1-Allyloxy-1-(4-bromphenyl)-2-[1′,2′,4′-triazolyl-(1′)]-äthan (Salze)
[-1-(1,2,4-Triazolyl-1′)]-[1(4′-chlorphenoxy]-3,3-dimethylbutan-2-on
N,N-Diallylchloracetamid
N-Isopropyl-2-chloracetanilid
N-(Butin-1-yl-3)-2-chloracetanilid
2-Methyl-6-äthyl-N-(propargyl)-2-chloracetanilid
2-Methyl-6-äthyl-N-(äthoxymethyl)-2-chloracetanilid
2-Methyl-6-äthyl-N-(2-methoxy-1-methyläthyl)-2-chloracetanilid
2-Methyl-6-äthyl-N-(isopropoxycarbonyläthyl)-2-chloracetanilid
2-Methyl-6-äthyl-N-(4-methoxypyrazol-1-yl-methyl)-2-chloracetanilid
2-Methyl-6-äthyl-N-(pyrazol-1-yl-methyl)-2-chloracetanilid
2,6-Dimethyl-N-(pyrazol-1-yl-methyl)-2-chloracetanilid
2,6-Dimethyl-N-(4-methylpyrazol-1-yl-methyl)-2-chloracetanilid
2,6-Dimethyl-N-(1,2,4-triazol-1-yl-methyl)-2-chloracetanilid
2,6-Dimethyl-N-(3,5-dimethylpyrazol-1-yl-methyl)-2-chloracetanilid
2,6-Dimethyl-N-(1,3-dioxalan-2-yl-methyl)-2-chloracetanilid
2,6-Dimethyl-N-(2-methoxyäthyl)-2-chloracetanilid
2,6-Dimethyl-N-(isobutoxymethyl)-2-chloracetanilid
2,6-Diäthyl-N-(methoxymethyl)-2-chloracetanilid
2,6-Diäthyl-N-(n-butoxymethyl)-2-chloracetanilid
2,6-Diäthyl-N-(äthoxycarbonylmethyl)-2-chloracetanilid
2,3,6-Trimethyl-N-(pyrazol-1-yl-methyl)-2-chloracetanilid
2,3-Dimethyl-N-(isopropyl)-2-chloracetanilid
2-(2-Methyl-4-chlorphenoxy)-N-methoxy-acetamid
2-(α-Naphthoxy)-N,N-diäthylpropionamid
2,2-Diphenyl-N,N-dimethylacetamid
α(3,4,5-Tribrompyrazol-1-yl)-N,N-dimethylpropionamid
N-(1,1-Dimethylpropinyl)-3,5-dichlorbenzamid
N-1-Naphthylphthalamidsäure
Propionsäure-3,4-dichloranilid
Cyclopropancarbonsäure-3,4-dichloranilid
Methacrylsäure-3,4-dichloranilid
2-Methylpentancarbonsäure-3,4-dichloranilid
N-2,4-Dimethyl-5-(trifluormethyl)-sulfonylamino-phenylacetamid
N-4-Methyl-5-(trifluormethyl)-sulfonylamino-phenylacetamid
2-Propionyl-amino-4-methyl-5-chlor-thiazol
O-(Methylsulfonyl)-glykolsäure-N-äthoxymethyl-2,6-dimethyl-anilid
O-(Methylaminosulfonyl)-glykolsäure-N-isopropyl-anilid
O-(i-Propylaminosulfonyl)-glykolsäure-N-butin-1-yl-3-anilid
O-(Methylaminosulfonyl)-glykolsäure-hexamethylenimid
2,6-Dichlor-thiobenzamid
2,6-Dichlorbenzonitril
3,5-Dibrom-4-hydroxy-benzonitril (Salze)
3,5-Dijod-4-hydroxy-benzonitril (Salze)
3,5-Dibrom-4-hydroxy-0,2,4-dinitrophenylbenzaldoxim (Salze)
3,5-Dibrom-4-hydroxy-0,2-Cyan-4-nitrophenylbenzaldoxim (Salze)
Pentachlorphenyl-Natriumsalz
2,4-Dichlorphenyl-4′-nitrophenyläther
2,4,6-Trichlorphenyl-4′-nitrophenyläther
2-Fluor-4,6-dichlorphenyl-4′-nitrophenyläther
2-Chlor-4-trifluormethylphenyl-4′-nitrophenyläther
2,4′-Dinitro-4-trifluormethyl-diphenyläther
2,4-Dichlorphenyl-3′-methoxy-4′-nitro-phenyläther
2-Chlor-4-trifluormethylphenyl-3′-äthoxy-4′-phenyläther
2-Chlor-4-trifluormethylphenyl-3′-carboxy-4′-nitro-phenyläther (Salze)
2,4-Dichlorphenyl-3′-methoxycarbonyl-4′-nitrophenyläther
2-(3,4-Dichlorphenyl)-4-methyl-1,2,4-oxadiazolidin-3,5-dion
2-(3-tert.Butylcarbamoyl-oxyphenyl)-4-methyl-1,2,4-oxadiazolidin-3,5-dion
2-(3-iso-Propylcarbamoyl-oxyphenyl)-4-methyl-1,2,4-oxadiazolidin-3,5-dion

2-Phenyl-3,1-benzoxazinon-(4)
(4-Bromphenyl)-3,4,5,9,10-pentaazatetracyclo-[5,4,1,$0^{2,6}$-0,$^{8,11}$]-dodeca-3,9-dien
2-Äthoxy-2,3-dihydro-3,3-dimethyl-5-benzofuranyl-methan-sulfonat
2-Äthoxy-2,3-dihydro-3,3-dimethyl-5-benzofuranyl-dimethyl-aminosulfonat
2-Äthoxy-2,3-dihydro-3,3-dimethyl-5-benzofuranyl-(N-methyl-N-acetyl)-aminosulfonat
3,4-Dichlor-1,2-benzisothiazol
N-4-Chlorphenyl-allylbernsteinsäureimid
2-Methyl-4,6-dinitrophenol (Salze, Ester)
2-sec. Butyl-4,6-dinitrophenol (Salze)
2-sec. Butyl-4,6-dinitrophenol-acetat
2-tert.Butyl-4,6-dinitrophenol-acetat
2-tert.Butyl-4,6-dinitrophenol (Salze)
2-tert.Butyl-5-methyl-4,6-dinitrophenol (Salze)
2-tert.Butyl-5-methyl-4,6-dinitrophenol-acetat
2-sec.Amyl-4,6-dinitrophenol (Salze, Ester)
1-(α,α-Dimethylbenzyl)-3-(4-methylphenyl)-harnstoff
1-Phenyl-3-(2-methylcyclohexyl)-harnstoff
1-Phenyl-1-benzoyl-3,3-dimethyl-harnstoff
1-(4-chlorphenyl)-1-benzoyl-3,3-dimethyl-harnstoff
1-(4-chlorphenyl)-3,3-dimethyl-harnstoff
1-(4-Chlorphenyl)-3-methyl-3-butin-1-yl-3-harnstoff
1-(3,4-Dichlorphenyl)-3,3-dimethyl-harnstoff
1-(3,4-Dichlorphenyl)-1-benzoyl-3,3-dimethyl-harnstoff
1-(3,4-Dichlorphenyl)-3-methyl-3-n-butyl-harnstoff
1-(4-i-Propylphenyl)-3,3-dimethyl-harnstoff
1-(3-Trifluormethylphenyl)-3,3-dimethyl-harnstoff
1-(α,α,β,β-Tetrafluoräthoxyphenyl)-3,3-dimethyl-harnstoff
1-(3-tert.Butylcarbamoyloxy-phenyl)-3,3-dimethyl-harnstoff
1-(3-Chlor-4-methylphenyl)-3,3-dimethyl-harnstoff
1-(3-Chlor-4-methoxyphenyl)-3,3-dimethyl-harnstoff
1-(3,5-Dichlor-4-methoxyphenyl)-3,3-dimethyl-harnstoff
1-[4(4'-Chlorphenoxy)-phenyl]-3,3-dimethyl-harnstoff
1-[4(4'-methoxyphenoxy)phenyl]-3,3-dimethyl-harnstoff
1-Cyclooktyl-3,3-dimethyl-harnstoff
1-(Hexahydro-4,7-methanindan-5-yl)-3,3-dimethyl-harnstoff
1-[1- oder 2-(3a,4,5,7,7a-Hexahydro)-4,7-methanoindanyl]-3,3-dimethyl-harnstoff
1-(4-Fluorphenyl)-3-carboxymethoxy-3-methyl-harnstoff
1-Phenyl-3-methyl-3-methoxy-harnstoff
1-(4-Chlorphenyl)-3-methyl-3-methoxy-harnstoff
1-(4-Bromphenyl)-3-methyl-3-methoxy-harnstoff
1-(3,4-Dichlorphenyl)-3-methyl-3-methoxy-harnstoff
1-(3-Chlor-4-bromphenyl)-3-methyl-3-methoxy-harnstoff
1-(3-Chlor-4-isopropylphenyl)-3-methyl-3-methoxy-harnstoff
1-(3-Chlor-4-methoxyphenyl)-3-methyl-3-methoxy-harnstoff
1-(3-tert.Butylphenyl)-3-methyl-3-methoxy-harnstoff
1-(2-Benzthiazolyl)-1,3-dimethyl-harnstoff
1-(2-Benzthiazolyl)-3-methyl-harnstoff
1-(5-Trifluormethyl-1,3,4-thiadiazolyl)-1,3-dimethyl-harnstoff
Imidazolidin-2-on-1-carbonsäure-iso-butylamid
1,2-Dimethyl-3,5-diphenylpyrazolium-methylsulfat
1,2-4-Trimethyl-3,5-diphenylpyrazolium-methylsulfat
1,2-Dimethyl-4-brom-3,5-diphenylpyrazolium-methylsulfat
1,3-Dimethyl-4-(3,4-dichlorbenzoyl)-5-[(4-methylphenylsulfonyl)-oxy]-pyrazol
2,3,5-Trichlor-pyridinol-(4)
1-Methyl-3-phenyl-5-(3'-trifluormethylphenyl)-pyridon-(4)
1-Methyl-4-phenyl-pyridiniumchlorid
1,1-Dimethylpyridiniumchlorid
3-Phenyl-4-hydroxy-6-chlorpyridazin
1,1'-Dimethyl-4,4'-dipyridylium-di(methylsulfat)
1,1'-Di(3,5-dimethylmorpholin-carbonylmethyl)-4,4'-dipyridylium-dichlorid
1,1'-Äthylen-2,2'-dipyridylium-dibromid
3-[1(N-Äthoxyamino)-propyliden]-6-äthyl-3,4-dihydro-2-H-pyran-2,4-dion
3-[1-(Allyloxyamino)-propyliden]-6-äthyl-3,4-dihydro-2-H-pyran-2,4-dion
2-[1(N-Allyloxyamino)-propyliden]-5,5-dimethylcyclohexan-1,3-dion (Salze)
2-[1-(N-Allyloxyamino)-butyliden]-5,5-dimethylcyclohexan-1,3-dion (Salze)
2-[1-(N-Allyloxyamino-butyliden]-5,5-dimethyl-4-methoxycarbonyl-cyclohexan-1,3-dion (Salze)
2-Chlorphenoxyessigsäure (Salze, Ester, Amide)
4-Chlorphenoxyessigsäure (Salze, Ester, Amide)
2,4-Dichlorphenoxyessigsäure (Salze, Ester, Amide)
2,4,5-Trichlorphenoxyessigsäure (Salze, Ester, Amide)
2-Methyl-4-chlorphenoxyessigsäure (Salze, Ester, Amide)
3,5,6-Trichlor-2-pyridinyl-oxyessigsäure (Salze, Ester, Amide)
α-Naphthoxyessigsäuremethylester
2-(2-Methylphenoxy)-propionsäure (Salze, Ester, Amide)
2-(4-Chlorphenoxy)-propionsäure (Salze, Ester, Amide)
2-(2,4-Dichlorphenoxy)-propionsäure (Salze, Ester, Amide)
2-(2,4,5-Trichlorphenoxy)-propionsäure (Salze, Ester, Amide)
2-(2-Methyl-4-chlorphenoxy)-propionsäure (Salze, Ester, Amide)
4-(2,4-Dichlorphenoxy)-buttersäure (Salze, Ester, Amide)
4-(2-Methyl-4-chlorphenoxy)-buttersäure (Salze, Ester, Amide)
Cyclohexyl-3-(2,4-dichlorphenoxy)-acrylat
9-Hydroxyfluoren-carbonsäure-(9) (Salze, Ester,

Amide)
2,3,6-Trichlorphenyl-essigsäure (Salze, Ester)
4-Chlor-2-oxo-benzothiazolin-3-yl-essigsäure (Salze, Ester)
Gibellerinsäure (Salze)
Dinatrium-methylarsonat
Mononatriumsalz der Methylarsonsäure
N-Phosphon-methyl-glycin (Salze)
N,N-Bis(phosphonmethyl)-glycin (Salze)
2-Chloräthanphosphonsäure-2-chloräthylester
Ammonium-äthyl-carbamoyl-phosphonat
Di-n-butyl-1-n-butylamino-cyclohexyl-phosphonat
Trithiobutylphosphit
0,0-Diisopropyl-5-(2-benzosulfonylamino-äthyl)-phosphordithioat
2,3-Dihydro-5,6-dimethyl-1,4-dithiin-1,1,4,4-tetraoxid
5-tert.Butyl-3-(2,4-dichlor-5-isopropoxyphenyl)-1,3,4-oxadiazolon-(2)
4,5-Dichlor-2-trifluormethyl-benzimidazol (Salze)
1,2,3,6-Tetrahydropyridazin-3,5-dion (Salze)
Bernsteinsäure-mono-N-dimethylhydrazid (Salze)
(2-Chloräthyl)-trimethyl-ammoniumchlorid
(2-Methyl-4-phenylsulfonyl)-trifluormethansulfonanilid
1,1-Dimethyl-4,6-diisopropyl-5-indanyl-äthylketon
Natriumchlorat
Ammoniumhodanid
Calciumcyanamid

Ausserdem ist es nützlich, die neuen erfindungsgemässen Verbindungen allein oder in Kombinationen mit anderen Herbiziden auch noch mit weiteren Pflanzenschutzmitteln gemischt gemeinsam auszubringen, beispielsweise mit Mitteln zur Bekämpfung von Schädlingen oder phytopatogenen Pilzen bzw. Bakterien. Von Interesse sind ferner die Mischbarkeit mit Mineralstofflösungen, welche zur Behebung von Ernährungs- oder Spurenelementmängeln eingesetzt werden. Zu den Einzelwirkstoffen oder Mischungen können auch Öle und Ölkonzentrate verschiedenen Typs, Netz- oder Haftmittel sowie Antischaummittel zugesetzt werden.

Die Anwendung erfolgt z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Giessen. Die Anwendungsformen richten sich ganz nach den Verwendungszwekken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlenwasserstoffe, zum Beispiel Benzol, Toluol, Xylol, Paraffin, Tetrahydronaphthalin, alkylierte Naphthaline oder deren Derivate zum Beispiel Methanol, Äthanol, Propanol, Butanol, Chloroform, Tetrachlorkohlenstoff, Cyclohexanol, Cyclohexanon, Chlorbenzol, Isophoron usw., stark polare Lösungsmittel, z.B. Dimethylformamid, Dimethylsulfoxid, N-Methylpyrrolidon, Wasser usw. in Betracht.

Wässrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und evtl. Lösungsmittel oder Öl bestehende Konzentrate hergestellt werden, die zur Verdünnung mit Wasser geeignet sind.

An oberflächenaktiven Stoffen sind zu nennen: Alkali-, Erdalkali-, Ammoniumsalze von Ligninsulfonsäure, Naphthalinsulfonsäuren, Phenolsulfonsäuren, Alkylarylsulfonate, Alkylsulfonate, Alkali- und Erdalkalisalze der Dibutylnaphthalinsulfonsäure, Lauryläthersulfat, Fettalkoholsulfate, fettsaure Alkali-, und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylen-octylphenoläther, äthoxyliertes Isooctylphenyl, -Octylphenol, -Nonylphenol, Alkylphenolpolyglykoläther, Tributylphenylpolyglykoläther, Alkylarylpolyätheralkohole, Isotridecylalkohol, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Kieselsäuren, Silikate, Talkum, Kaolin, Kalkstein, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nusschalenmehle, Cellulosepulver und andere feste Trägerstoffe.

Tabelle 1 – Liste der Pflanzennamen

| Botanischer Name | Abkürzung in Tab. | Deutscher Name | Englischer Name |
|---|---|---|---|
| Amaranthus retroflexus | Amar. retr. | Zurückgekrümmter Fuchsschwanz | redroot pigweed |
| Arachys hypogaea | | Erdnuss | peanuts (groundnuts) |
| Avena fatua | | Flughafer | wild oats |
| Brassica napus | | Raps | rape (turnip) |
| Centaurea cyanus | | Kornblume | cornflower |
| Digitaria sanguinalis | Digit. sang. | Blutfingerhirse | large crabgrass |
| Euphorbia geniculata | Euphorb. genic. | Südamerikanische Wolfsmilchart | Southamerican member of the spruge family |
| Glycine max | | Sojabohnen | soybeans |
| Gossypium hirsutum | | Baumwolle | cotton |
| Lolium multiflorum | | italienisches Raygras | italian ryegrass |
| Nicandra physaloides | Nicandra physal. | Giftbeere | apple-of-Peru |
| Oryza sativa | | Reis | rice |
| Pisum sativum | | Erbsen | English peas |
| Poa annua | | einjährige Rispe | annual bluegrass |
| Sesbania exaltata | | Turibaume | hemp sesbania (coffeeweed) |
| Ipomoea | | Prunkwindearten | morning glory |
| Solanum nigrum | Solan. nigr. | schwarzer Nachtschatten | black nightshade |
| Sorghum bicolor | | Mohrenhirse (Kulturhirse) | sorghum |
| Stellaria media | | Vogelsternmiere | chickweed |
| Triticum aestivum | Tritic. aest. | Weizen | wheat |

Tabelle 2 – Neue Thiolcarbamate als selektive Herbizide bei Nachauflaufanwendung im Gewächshaus

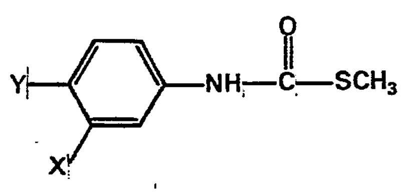

| Wirkstoff-Nr. | Substitutionen X | Y | kg/ha | Testpflanzen und % Schädigung: Arachis hypogaea | Brassica napus | Tritic. aest. | Amar. retr. | Digit. sang. | Euphorb. genic. | Nicandra physal. | Solan. nigr. | Stellaria media |
|---|---|---|---|---|---|---|---|---|---|---|---|---|
| 2 | Cl | $C_3H_7i$ | 0,5 | 5 | 5 | 13 | 100 | 100 | 80 | 100 | 84 | 98 |
| | | | 1,0 | 5 | 12 | 15 | 100 | 100 | 83 | 100 | 99 | 98 |
| | Cl | H | 0,5 | 0 | 30 | 40 | 30 | 40 | 0 | 20 | 0 | 40 |
| | bekannt | | 1,0 | 0 | 30 | 50 | 80 | 40 | 10 | 25 | 0 | 40 |

0 = keine Schädigung
100 = Pflanzen abgestorben

Tabelle 3 – Selektive Bekämpfung von unerwünschten Pflanzen in Leguminosenkulturen bei Nachauflaufanwendung im Gewächshaus
Verbindung Nr. 18
Aufwandmenge 0,25 kg/ha

| Testpflanzen | Schädigung % |
|---|---|
| Arachis hypogaea | 0 |
| Glycine max | 10 |
| Amaranthus retroflexus | 100 |
| Centaurea cyanus | 90 |
| Digitaria sanguinalis | 80 |
| Euphorbia geniculata | 100 |
| Poa annua | 95 |
| Sesbania exaltata | 100 |
| Stellaria media | 98 |

0 = keine Schädigung
100 = Pflanzen zerstört

Tabelle 4 - Bekämpfung von Sesbania exaltata in verschiedenen Kulturen bei Nachauflaufanwendung im Gewächshaus
Verbindung Nr. 1

| Testpflanzen | Schädigung % | |
|---|---|---|
| Aufwandmenge | 0,25 | 0,5 kg/ha |
| Arachis hypogaea | 0 | 0 |
| Glycine max | 0 | 0 |
| Oryza sativa | 0 | 0 |
| Pisum sativum | 10 | 15 |
| Sorghum bicolor | 0 | 15 |
| Sesbania exaltata | 100 | 100 |

0 = keine Schädigung
100 = Pflanzen völlig abgestorben

Tabelle 5 - Selektive Unkrautbekämpfung in Leguminosenkulturen bei Nachauflaufbehandlung im Gewächshaus
Verbindung Nr. 29

| Testpflanzen | Schädigung % bei 0,5 kg/ha |
|---|---|
| Arachis hypogaea | 0 |
| Glycine max | 10 |
| Pisum sativum | 10 |
| Amaranthus retroflexus | 100 |
| Centaurea cyanus | 80 |
| Digitaria sanguinalis | 90 |
| Poa annua | 90 |
| Sesbania exaltata | 100 |
| Stellaria media | 98 |

0 = ohne Schädigung
100 = Pflanzen völlig abgestorben

Tabelle 6 - Selektive Bekämpfung von unerwünschten Pflanzen bei Nachauflaufanwendung im Gewächshaus
Verbindung Nr. 54

| Testpflanzen | Schädigung % bei 0,5 kg/ha |
|---|---|
| Arachis hypogaea | 0 |
| Gossypium hirsutum | 0 |
| Amaranthus retroflexus | 100 |
| Avena fatua | 80 |
| Digitaria sanguinalis | 100 |
| Euphorbia geniculata | 100 |
| Nicandra physaloides | 100 |
| Sesbania exaltata | 100 |
| Solanum nigrum | 100 |
| Stellaria media | 98 |

0 = ohne Schädigung
100 = Pflanzen völlig abgestorben

Tabelle 7 - Herbizide Wirkung weiterer Verbindungen bei Nachauflauf im Gewächshaus

| Wirkstoff-Nr. | kg/ha | Testpflanzen und Schädigung (%) Ipomoea spp. | Centaurea cyanus | Lolium multiflorum |
|---|---|---|---|---|
| 5 | 3.0 | - | 90 | - |
| 25 | 3.0 | 90 | 100 | 80 |
| 42 | 3.0 | - | 90 | 100 |
| 57 | 3.0 | 90 | 90 | 90 |
| 62 | 3.0 | 95 | 100 | - |
| 63 | 3.0 | - | 90 | 90 |

0 = keine Schädigung
100 = Pflanzen völlig abgestorben

Beispiel 3
Man vermischt 90 Gewichtsteile der Verbindung 1 mit 10 Gewichtsteilen N-Methyl-α-pyrrolidon und erhält eine Lösung, die zur Anwendung in Form kleinster Tropfen geeignet ist.

Beispiel 4
20 Gewichtsteile der Verbindung 2 werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgiessen und feines Verteilen der Lösung in 10 000 Gewichtsteilen Wasser erhält man eine wässrige Dispersion, die 0,02 Gew.% des Wirkstoffs enthält.

Beispiel 5
20 Gewichtsteile der Verbindung 3 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10

Gewichtsteilen des Anlagerungsproduktes von 40 Mol Äthylenoxid an 1 Mol Ricinusöl besteht. Durch Eingiessen und feines Verteilen der Lösung in 100000 Gewichtsteilen Wasser erhält man eine wässrige Dispersion, die 0,02 Gew.% des Wirkstoffs enthält.

Beispiel 6

20 Gewichtsteile der Verbindung 1 werden in einer Mischung gelöst, die aus 25 Gewichtsteilen Cyclohexanol, 65 Gewichtsteilen einer Mineralölfraktion vom Siedepunkt 210 bis 280 °C und 10 Gewichtsteilen des Anlagerungsproduktes von 40 Mol Äthylenoxid an 1 Mol Ricinusöl besteht. Durch Eingiessen und feines Verteilen der Lösung in 100 000 Gewichtsteilen Wasser erhält man eine wässrige Dispersion, die 0,02 Gew.% des Wirkstoffs enthält.

Beispiel 7

20 Gewichtsteile des Wirkstoffs 3 werden mit 3 Gewichtsteilen des Natriumsalzes der Diisobutylnaphthalin-α-sulfonsäure, 17 Gewichtsteilen des Natriumsalzes einer Ligninsulfonsäure aus einer Sulfit-Ablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gew.% des Wirkstoffs enthält.

Beispiel 8

3 Gewichtsteile der Verbindung 3 werden mit 97 Gewichtsteilen feinteiligem Kaolin innig vermischt. Man erhält auf diese Weise ein Stäubemittel, das 3 Gew.% des Wirkstoffs enthält.

Beispiel 9

30 Gewichtsteile der Verbindung 4 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Beispiel 10

40 Gewichtsteile des Wirkstoffs 1 werden mit 10 Teilen Natriumsalz eines Phenolsulfonsäure-harnstoff-formaldehyd-Kondensats, 2 Teilen Kieselgel und 48 Teilen Wasser innig vermischt. Man erhält eine stabile wässrige Dispersion. Durch Verdünnen mit 100 000 Gewichtsteilen Wasser erhält man eine wässrige Dispersion, die 0,04 Gew.% Wirkstoff enthält.

Beispiel 11

20 Teile des Wirkstoffs 2 werden mit 2 Teilen Calciumsalz der Dodecylbenzolsulfonsäure, 8 Teilen Fettalkohol-polyglykoläther, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

**Ansprüche für die Vertragsstaaten: BE, CH, DE, FR, GB, IT, LI, NL, SE**

1. N-Arylthiolcarbamat der allgemeinen Formel

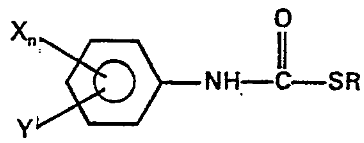

in der
R Methyl oder Äthyl
X Halogen und
Y Alkyl, Halogenalkyl mit mindestens 2 C-Atomen, Alkoxyalkyl, Cycloalkyl, Alkoxy, Halogenmethoxy und
n die Zahlen 1 oder 2 bedeuten,
wobei die Bedeutungen von X für den Fall, dass n 2 bedeutet, unabhängig voneinander gewählt werden können.

2. Herbizid, enthaltend ein N-Arylthiolcarbamat gemäss Anspruch 1.

3. Herbizid gemäss Anspruch 2, enthaltend einen festen oder flüssigen Trägerstoff und ein N-Arylthiolcarbamat gemäss Anspruch 1.

4. Verfahren zur Bekämpfung von unerwünschtem Pflanzenwachstum, dadurch gekennzeichnet, dass man die Pflanzen oder den Boden behandelt mit einem N-Arylthiolcarbamat gemäss Anspruch 1.

5. N-Arylthiolcarbamat gemäss Anspruch 1, ausgewählt aus der Gruppe bestehend aus S-methyl-N(3-chlor-4-isopropyl-phenyl)-thiolcarbamat, S-Methyl-N(3-chlor-4-(1-chlorisopropyl)-phenyl)-thiolcarbamat und S-Methyl-N(3-chlor-4-(difluormethoxy)-phenyl)-thiolcarbamat.

6. Herbizid gemäss Anspruch 2, enthaltend eine Verbindung ausgewählt aus der Gruppe bestehend aus S-Methyl-N(3-chlor-4-isopropyl-phenyl)-thiolcarbamat, S-Methyl-N(3-chlor-4-(1-chlorisopropyl)-phenyl)-thiolcarbamat und S-Methyl-N(3-chlor-4-difluormethoxy)-phenyl)-thiolcarbamat.

**Ansprüche für den Vertragsstaat AT**

1. Herbizid, enthaltend ein N-Arylthiolcarbamat der Formel

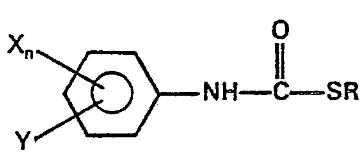

in der
R Methyl oder Äthyl
X Halogen und
Y Alkyl, Halogenalkyl mit mindestens 2 C-Atomen, Alkoxyalkyl, Cycloalkyl, Alkoxy, Halogenmethoxy, und
n die Zahlen 1 oder 2 bedeuten, wobei für den Fall, dass n 2 bedeutet, die Bedeutungen von X

unabhängig voneinander gewählt werden können.

2. Herbizid gemäss Anspruch 1, enthaltend einen festen oder flüssigen Trägerstoff und ein N-Arylthiolcarbamat wie in Anspruch 1 definiert.

3. Verfahren zur Bekämpfung von unterwünschtem Pflanzenwachstum, dadurch gekennzeichnet, dass man die Pflanzen oder den Boden behandelt mit einem N-Arylthiolcarbamat wie in Anspruch 1 definiert.

4. Herbizid gemäss Anspruch 1, enthaltend eine Verbindung ausgewählt aus der Gruppe bestehend aus S-Methyl-N(3-chlor-4-isopropylphenyl)-thiolcarbamat, S-Methyl-N(3-chlor-4-(1-chlorisopropyl)-phenyl)-thiolcarbamat und S-Methyl-N(3-chlor-4-(difluormethoxy)-phenyl)-thiolcarbamat.

**Claims for the Contracting States: BE, CH, DE, FR, GB, IT, LI, NL, SE**

1. An N-arylthiolcarbamate of the general formula

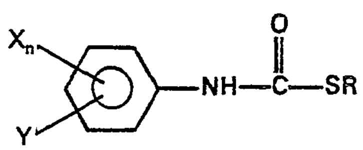

where R denotes methyl or ethyl, X denotes halogen, Y denotes alkyl, haloalkyl of at least 2 carbon atoms, alkoxyalkyl, cycloalkyl, alkoxy or halomethoxy, and n denotes one of the integers 1 and 2, it being possible for the meanings of X to be chosen independently of one another in the event that n denotes 2.

2. A herbicide containing an N-arylthiolcarbamate as claimed in claim 1.

3. A herbicide as claimed in claim 2 containing a solid or liquid carrier and an N-arylthiolcarbamate as claimed in claim 1.

4. A process for combating unwanted plant growth, characterized in that the plants or the soil are treated with an N-arylthiolcarbamate as claimed in claim 1.

5. An N-arylthiolcarbamate as claimed in claim 1 selected from the group consisting of S-methyl-N-(3-chloro-4-isopropylphenyl)-thiolcarbamate, S-methyl-N-(3-chloro-4-(1-chloroisopropyl)-phenyl)-thiolcarbamate and S-methyl-N-(3-chloro-4-(difluoromethoxy)-phenyl)-thiolcarbamate.

6. A herbicide as claimed in claim 2 containing a compound selected from the group consisting of S-methyl-N-(3-chloro-4-isopropylphenyl)-thiolcarbamate, S-methyl-N-(3-chloro-4-(1-chloroisopropyl)-phenyl)-thiolcarbamate and S-methyl-N-(3-chloro-4-(difluoromethoxy)-phenyl)-thiolcarbamate.

**Claims for the Contracting State: AT**

1. A herbicide containing an N-arylthiolcarbamate of the formula

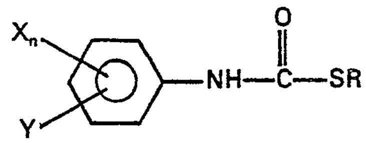

where R denotes methyl or ethyl, X denotes halogen, Y denotes alkyl, haloalkyl of at least 2 carbon atoms, alkoxyalkyl, cycloalkyl, alkoxy or halomethoxy, and n denotes one of the integers 1 and 2, it being possible for the meanings of X to be chosen independently of one another in the event that n denotes 2.

2. A herbicide as claimed in claim 1 containing a solid or liquid carrier and an N-arylthiolcarbamate as defined in claim 1.

3. A process for combating unwanted plant growth, characterized in that the plants or the soil are treated with an N-arylthiolcarbamate as defined in claim 1.

4. A herbicide as claimed in claim 1 containing a compound selected from the group consisting of S-methyl-N-(3-chloro-4-isopropylphenyl)-thiolcarbamate, S-methyl-N-(3-chloro-4-(1-chloroisopropyl)-phenyl)-thiolcarbamate and S-methyl-N-(3-chloro-4-(difluoromethoxy)-phenyl)-thiolcarbamate.

**Revendications pour les Etats contractants: BE, CH, LI, DE, FR, GB, IT, NL, SE**

1. N-arylthiolcarbamate de formule

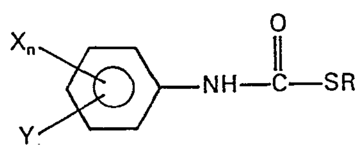

dans laquelle
R représente méthyle ou éthyle
X halogène et
Y alkyle, halogénalkyle à au moins 2 atomes C, alcoxyalkyle, cycloalkyle, alcoxy, halogénométhoxy et
n les nombres 1 ou 2
les significations de X, dans le cas où n représente 2, pouvant être choisies indépendamment l'une de l'autre.

2. Herbicide contenant un N-arylthiolcarbamate selon la revendication 1.

3. Herbicide selon la revendication 2 contenant un support solide ou liquide et un N-arylthiolcarbamate selon la revendication 1.

4. Procédé de lutte contre la croissance indésirable des plantes, caractérisé par le fait que l'on traite les plantes ou le sol avec un N-arylthiolcarbamate selon la revendication 1.

5. N-arylthiolcarbamate selon la revendication 1, choisi dans le groupe constitué de S-méthyl-N(3-chlor-4-isopropyl-phényl)-thiolcarbamate, S-méthyl-N(3-chlor-4-(1-chlorisopropyl)-phényl)-thiolcarbamate et S-méthyl-N (3-chlor-4-(difluorométhoxy)-phényl)- thiolcarbamate.

6. Herbicide selon la revendication 2 contenant un composé choisi dans le groupe constitué de S-méthyl-N(3-chlor-4-isopropylphényl)-thiolcarbamate, S-méthyl-N (3-chlor-4-(1-chlor-isopropyl)-phényl)-thiolcarbamate et S-méthyl-N(3-chlor-4-(difluorométhoxy)-phényl)- thiolcarbamate.

**Revendications pour l'Etat contractant: AT**

1. Herbicide contenant un N-arylthiolcarbamate de formule

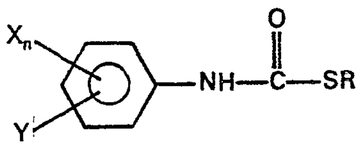

dans laquelle
R représente méthyle ou éthyle
X halogène et
Y alkyle, halogénalkyle à au moins 2 atomes C, alcoxyalkyle, cycloalkyle, alcoxy, halogénométhoxy et
n les nombres 1 ou 2
les significations de X, dans le cas où n représente 2, pouvant être choisies indépendamment l'une de l'autre.

2. Herbicide selon la revendication 1, contenant un support solide ou liquide et un N-arylthiolcarbamate tel que défini à la revendication 1.

3. Procédé de lutte contre la croissance indésirable des plantes, caractérisé par le fait que l'on traite les plantes ou le sol avec un N-arylthiolcarbamate tel que défini à la revendication 1.

4. Herbicide selon la revendication 1 contenant un composé choisi dans le groupe constitué de S-méthyl-N(3-chlor-4-isopropylphényl)-thiolcarbamate, S-méthyl-N(3-chlor-4-(1-chlor-isopropyl)-phényl)-thiolcarbamate et S-méthyl-N (3-chlor-4-(difluorométhoxy)-phényl)-thiolcarbamate.